# EUROPÄISCHE PATENTANMELDUNG

(11) **EP 2 957 595 A1**
(43) Veröffentlichungstag der Anmeldung: **23.12.2015**
(21) Anmeldenummer: 14172986.3
(22) Anmeldetag: 18.06.2014
(51) Int. Cl.: C08L 25/06, C08L 33/06, C08K 3/26, C08K 5/52, C08J 9/16

(54) **Flammschutzmittelzusammensetzung zur Verwendung in Styrolpolymerschaumstoffen**

(71) Anmelder: BASF SE, 67056 Ludwigshafen (DE)
(72) Erfinder: Daeschlein, Christian, 68199 Mannheim (DE); Fischer, Horst, 67454 Hassloch (DE); Longo-Schedel, Daniela, 53757 Sankt Augustin (DE); Scherzer, Dietrich, 67433 Neustadt (DE); Merkel, Peter, 67308 Zellertal (DE); Dietzen, Franz-Josef, 67454 Hassloch (DE)

(57) **Zusammenfassung**

Eine Flammschutzmittelmischung, enthaltend
(a) mindestens ein thermoplastisches Polymer (P),
(b) mindestens eine organische Bromverbindung mit einem Bromgehalt im Bereich von 40 bis 90 Gew.-% als Flammschutzmittel (FR),
(c) gegebenenfalls ein oder mehrere Flammschutzsynergisten (FS),
(d) mindestens ein epoxymodifiziertes Copolymer auf Basis von Acrylat- oder Methacrylat als Stabilisator (S1),
(e) mindestens ein Phosphit als Stabilisator (S2) und/oder
(f) mindestens ein oder mehrere Säurefänger (S3),
sowie Verwendung der Flammschutzmittelmischung zur Herstellung von flammgeschützten Styrolpolymerschaumstoffen.

## Beschreibung

Die vorliegende Erfindung betrifft eine Flammschutzmittelmischung, die
(a) mindestens ein thermoplastisches Polymer (P),
(b) mindestens eine organische Bromverbindung mit einem Bromgehalt im Bereich von 40 bis 90 Gew.-% als Flammschutzmittel (FR),
(c) gegebenenfalls ein oder mehrere Flammschutzsynergisten (FS),
(d) mindestens ein epoxymodifiziertes Copolymer auf Basis von Acrylat- und/oder Methacrylat als Stabilisator (S1),
(e) mindestens ein Phosphit als Stabilisator (S2) oder
(f) mindestens ein oder mehrere Säurefänger (S3),
enthält, sowie deren Verwendung zur Herstellung von flammgeschützten Styrolpolymerschaumstoffen.

Viele Polymere wie Polyolefine, Polyamide und Polystyrol sind brandgefährdet und müssen daher für viele Anwendungen mit Flammschutzmitteln ausgerüstet werden, um ein zufriedenstellendes Brandverhalten zu zeigen. Eine bei Polymeren häufig eingesetzte Klasse von Flammschutzmitteln sind halogenierte organische Flammschutzmittel.

Problematisch bei der Verwendung der halogenierten organischen Flammschutzverbindungen in Polymeren ist, dass die Polymere in der Regel bei erhöhten Temperaturen mit den Flammschutzmitteln verarbeitet werden, um eine gleichmäßige Verteilung der Flammschutzmittel in der Polymermatrix zu erreichen. Bei den dabei erforderlichen Temperaturen findet häufig schon die Zersetzung eines Teiles der eingesetzten halogenierten Flammschutzmittel statt.

Insbesondere bei Extrusionsprozessen erhöht sich die Temperaturbelastung für die thermosensiblen Flammschutzmittel aufgrund der Verweilzeit und durch lokale, scherinduzierte Temperaturspitzen. Die Flammschutzadditive können hierbei abgebaut und die effektiv wirksame Menge im Produkt verringert werden. Zudem wirkt der beim Abbau der Additive entstehende Halogenwasserstoff korrosiv auf die eingesetzten Anlagen. Schließlich führt der beschriebene Abbau häufig zu unerwünschten Verfärbungen im Produkt.

Bei den als Ersatz für Hexabromcyclododecan eingesetzten bromierten Polymeren, wie PolyButadien-Styrol-Copolymerisaten, verstärkt die Inkompatibilität mit der Polystyrolmatrix aufgrund von Agglomeratbildung während der Extrusion zusätzlich die Zersetzung des Flammschutzmittels.

Man ist daher dazu übergegangen, den Polymeren neben dem halogenierten organischen Flammschutzmittel einen Stabilisator zuzusetzen, der die Zersetzung des Flammschutzmittels bei der Verarbeitung der Polymere verhindern oder zumindest verringern soll.

Aus der WO 98/16574 ist die Verwendung von Zeolith A als Wärmestabilisator für halogenierte Flammschutzmittel in Styrolpolymerschaumstoffen bekannt.

Gemäß WO 98/16579 werden Zinkverbindungen wie Zinkstearat in Kombination mit Zeolithen als thermische Stabilisatoren in halogenhaltigen Flammschutzformulierungen eingesetzt.

Nach WO 2012/016906 können als thermische Stabilisatoren für organische halogenierte Flammschutzmittel mit Carbonsäuren teilveresterte Polyole, die eine Verseifungszahl von 80 bis 300 mg/KOH/g und eine OH-Zahl von 200 bis 800 mgKOH/g aufweisen, beispielsweise Glycerinmonstearat, eingesetzt werden.

WO 2005/103133 beschreibt die Verwendung von thermoplastischen Acrylaten oder Methacrylaten, die im Bereich von 50 bis 150°C schmelzen, als thermische Stabilisatoren für bromhaltige Flammschutzmittel, bei denen die Bromatome direkt an aliphatische oder cycloaliphatische Kohlenstoffe gebunden sind.

Die WO 2010/080285, WO 2012/082332 und WO 2013/048785 beschreiben die Stabilisierung von aliphatischen, bromhaltigen Polymeren bei der Verarbeitung in Polymerschmelzen bei hohen Temperaturen durch eine Mischung von Alkylphosphiten und Epoxyverbindungen und deren Verwendung in Polystyrolschaumstoffen.

WO 2012/127463 beschreibt eine Flammschutzmittelzusammensetzung für Polypropylen aus bromierten Epoxiden und einem Kompatibilizer mit Polyethylen-Segmenten.

Weiterhin können die bei Zersetzung der halogenierten Flammschutzmittel entstehenden Halogenwasserstoffe durch Säurefänger abgefangen werden, wie dies beispielsweise in der WO 2009/065880 erwähnt wird. Dazu werden beispielsweise Hydroxide des Magnesiums, Aluminiums oder Zinks oder auch Alkalimetallcarbonate oder Alkalimetallhydrogencarbonate verwendet.

Trotz der bereits bekannten thermischen Stabilisatoren für organische halogenierte Flammschutzmittel besteht Bedarf an weiteren thermischen Stabilisatoren, die eine gute Wirksamkeit auf die Stabilität der Flammschutzmittel bei der Verarbeitung der Polymeren zeigen und gleichzeitig die schützende Wirkung der Flammschutzmittel nicht negativ beeinflussen. Die mit halogeniertem Flammschutzmittel und thermischem Stabilisator ausgerüsteten Polymere sollen weiterhin ein gutes Brandverhalten zeigen.

Aufgabe der vorliegenden Erfindung war es, eine Flammschutzmittelmischung mit verbesserter thermischer Stabilität zu finden, die insbesondere zur Herstellung von flammgeschützten Styrolpolymerschaumstoffen geeignet ist und eine Einarbeitung von Flammschutzmittelmischungen auf Basis von bromierten organischen Verbindungen durch Extrusion bei Temperaturen über 180°C ermöglicht. Dabei sollte die Flammschutzwirkung erhalten und die Freisetzung korrosiver Abbauprodukte weitgehend vermieden werden.

Demgemäß wurde eine Flammschutzmittelmischung gefunden, die
(a) mindestens ein thermoplastisches Polymer (P),
(b) mindestens eine organische Bromverbindung mit einem Bromgehalt im Bereich von 40 bis 90 Gew.-%, bevorzugt im Bereich von 50 bis 80 Gew.-%, als Flammschutzmittel (FR),
(c) gegebenenfalls ein oder mehrere Flammschutzsynergisten (FS),
(d) mindestens ein epoxymodifiziertes Copolymer auf Basis von Acrylat- und/oder Methacrylat als Stabilisator (S1),
(e) mindestens ein Phosphit als Stabilisator (S2) oder
(f) mindestens ein oder mehrere Säurefänger (S3),
enthält.

Eine bevorzugte Flammschutzmittelmischung besteht aus
(a) 5 bis 80 Gew.-%, bevorzugt 30 bis 60 Gew.-%, mindestens eines thermoplastischen Polymers,
(b) 18,5 bis 55 Gew.-%, bevorzugt 26 bis 50 Gew.-%, mindestens einer organischen Bromverbindung mit einem Bromgehalt im Bereich von 40 bis 90 Gew.-%, bevorzugt im Bereich von 50 bis 80 Gew.-%, als Flammschutzmittel (FR),
(c) 0 bis 10 Gew.-%, bevorzugt 1 bis 8 Gew.-%, ein oder mehrerer Flammschutzsynergisten (FS),
(d) 0,5 bis 10 Gew.-%, bevorzugt 1 bis 4 Gew.-%, mindestens ein epoxymodifiziertes Copolymer auf Basis von Acrylat- und/oder Methacrylat- als Stabilisator (S1),
(e) 0,5 bis 10 Gew.-%, bevorzugt 1 bis 4 Gew.-%, mindestens eines Phosphits als Stabilisator (S2) und
(f) 0,5 bis 10 Gew.-%, bevorzugt 1 bis 4 Gew.-%, ein oder mehrerer Säurefänger (S3).

Als thermoplastisches Polymer (P) enthält die Flammschutzmittelmischung bevorzugt mindestens ein Styrolpolymer. Geeignete Styrolpolymere sind Homo- oder Copolymere, die einpolymerisierte Einheiten aus vinylaromatischen Monomeren, insbesondere Styrol, enthalten. Beispiele hierfür sind Homopolystyrol (glasklares Polystyrol, GPPS), Schlagzähpolystyrol (HIPS), anionisch polymerisiertes Polystyrol oder Schlagzähpolystyrol (A-IPS), Styrol-α-Methstyrolcopolymere, Acrylnitril-Butadien-Styrolpolymerisate (ABS), Styrol-Acrylnitril-Polymer (SAN) Acrylnitril-Styrol-Acrylester (ASA), Styrolacrylate wie Styrolmethylacrylat (SMA) und Styrolmethyl-methacrylat (SMMA), Methyacrylat-Butadien-Styrol (MBS), Methylmethacrylat-Acrylnitril-Butadien-Styrol (MABS)- polymerisate, Styrol-N-Phenylmaleinsäureimid-Copolymere (SPMI) oder Mischungen davon. Die genannten Styrolpolymeren können mit Polyolefinen, wie Polyethylen oder Polypropylen und Polyphenylenether (PPE) abgemischt werden.

Als Flammschutzmittel (FR) werden organische Bromverbindung mit einem Bromgehalt im Bereich von 40 bis 90 Gew.-%, bevorzugt im Bereich von 50 bis 80 Gew.-%, eingesetzt. Insbesondere geeignet sind aliphatische, cycloaliphatische und aromatische Bromverbindungen, wie Hexabromcyclododekan (HBCD), Pentabrommonochlorcyclohexan, Pentabromphenylallylether oderTetrabrombisphenol-A-bis(allylether).

Desweiteren geeignet sind halogenierte Polymere, beispielsweise halogenierte Styrol-Butadien-Blockcopolymere. Die halogenierten Polymeren weisen bevorzugt ein mittleres Molekulargewicht im Bereich von 5.000 bis 300.000, insbesondere 30.000 - 150.000, bestimmt mittels Gelpermeationschromatographie (GPC) auf. Das halogenierte Polymer weist bevorzugt in der thermogravimetrischen Analyse (TGA, gemessen nach DIN 51006 - Thermische Analyse (TA), Thermogravimetrie (TG, Grundlagen) einen Gewichtsverlust von höchstens 5 Gew.-% bis zu einer Temperatur von 220°C und einer Aufheizrate von 30 K/5 min auf. Bevorzugte halogenierte Polymere sind bromiertes Polystyrol oder Styrol-Butadien-Blockcopolymer mit einem Bromgehalt im Bereich von 40 bis 80 Gew.-%. Besonders bevorzugt werden bromierte Styrol-Butadien-Blockcopolymere, wie in WO 2007/058736 beschrieben.

Geeignete Flammschutzsynergisten (FS) sind thermische Radikalbildner mit Halbwertszeiten von 6 Minuten bei Temperaturen im Bereich von 110 bis 300 °C, bevorzugt 140 bis 230 °C. Besonders bevorzugt werden Dicumyl, Dicumylperoxid, Cumylhydroperoxid, Di-tert.-butyl-peroxid, Tert.-butyl-hydroperoxid oder Mischungen davon, eingesetzt.

Als Stabilisator (S1) enthält die Flammschutzmittelmischung mindestens ein epoxymodifiziertes Copolymer auf Basis von Acrylat- und/oder Methacrylat-. Bevorzugte Copolymere enthalten Acrylat- oder Methacrylat-, besonders bevorzugt Glycidylmethacrylat-, und Styrolmonomereinheiten. Geeignete Copolymere sind kommerziell unter der Markenbezeichnung Joncryl® ADR erhältich. Die als Stabilisator (S1) eingesetzten Copolymere weisen bevorzugt ein Epoxyequivalentgewicht (EEW) im Bereich von 100 bis 400 g/mol, besonders bevorzugt im Bereich von 250 bis 350 g/ mol auf. Bevorzugt liegt die Glasübergangstemperatur Tg für die Copolymeren im Bereich von 40 bis 60°C, ermittelt mittels DSC nach ISO 11357-2 bei einer Aufheizrate von 20 K/min. Besonders bevorzugt werden Joncryl® ADR 4370 und Joncryl® ADR 4368. Insbesondere bevorzugt wird Joncryl® ADR 4370.

Der Stabilisator S1 verbessert die Kompatibilität des bromierten Flammschutzmittels mit der Styrolpolymermatrix und verringert dadurch Agglomeration und Abbau des bromierten Flammschutzmittels bei der Extrusion. Der Stabilisator S1 verringert daneben die Viskosität der Polymerschmelze, was eine schonendere Einarbeitung des Flammschutzmittels während der Extrusion ermöglicht. Zudem wirkt der Stabilisator S1 als thermischer Stabilisator für die bromierten Flammschutzmittel. Gegebenenfalls bei der Extrusion freiwerdende Bromwasserstoffsäure wird reversibel gebunden und kann im Brandfalle wieder freigegeben werden.

Als Stabilisator (S2) eignen sich bevorzugt cyclische Diphosphite, wie die kommerziell erhältlichen Produkte Bis(2,4-ditert-butylphenyl) Pentaerytritol Diphosphit (Irgafos® 126) der BASF oder 2,4-dicumylphenyl) Pentaerythritol Diphosphie (Doverphos® S-9228) oder Distearyl Pentaerythritol Diphosphit (Doverphos® S682) der Firma Dover Chemical Corporation .

Als Säurefänger (S3) eignen sich beispielsweise Al(OH)₃, Mg(OH)₂, Hydrotalcit, NaHCO₃, KOH oder NaOH. Bevorzugt enthält die Flammschutzmittelmischung Hydrotalcit, Al(OH)₃ oder Mg(OH)₂. Es können natürliche oder synthetische Hydrotalkite eingesetzt werden. Synthetische Hydrotalcite werden häufig auch als Dihydrotalcite (DHT) bezeichnet.

Gegenstand der Erfindung ist auch die Verwendung der oben beschriebenen, erfindungsgemäßen Flammschutzmittelmischungen zur Herstellung von flammgeschützten Styrolpolymerschaumstoffen. Hierbei wird die Flammschutzmittelmischung üblicherweise in Mengen eingesetzt, die einen Gehalt an Flammschutzmittel (FR) im Bereich von 0,5 bis 5 Gew.-%, bevorzugt 1 bis 3 Gew.-%, bezogen auf den Schaumstoff, ergibt.

Zur Herstellung von expandierbaren Styolpolymergranulaten (EPS) kann die erfindungsgemäße Flammschutzmittelmischung in eine Styrolpolymerschmelze eingemischt, durch eine Düsenplatte extrudiert und in einem Unterwassergranulator unter Druck granuliert werden. Geeignete Verfahrensbedingungen und weitere Additive, wie IR-Absorber, sind beispielsweise in WO 2009/065880 und WO 2011/073141 beschrieben.

Zur Herstellung von Styolpolymerextrusionsschaumstoffen (XPS) kann die erfindungsgemäße Flammschutzmittelmischung in eine Styrolpolymerschmelze eingemischt und durch eine Schlitzdüse extrudiert werden. Geeignete Verfahrensbedingungen und weitere Additive, wie IR-Absorber, sind beispielsweise in WO 2011/073141 beschrieben.

### Beispiele

### Einsatzstoffe:

- PS 158K Q4: Polystyrol der Styrolution GmbH (MVR (200 °C, 5 kg) von 3 ml/10 min, Vicat-Erweichungstemperatur (VST/A/50) von 106 °C)

### Flammschutzmittel:

- FR: Emerald Innovation 3000 (Chemtura, Bromiertes Polymer mit Mw 100.000-160.000 g/mol, Br-Gehalt von ca. 64 Gew.- %, TGA 5 % wt. Loss bei 262 °C)

### Flammschutzsynergist:

- FS: Dicumyl CCDFB90 (United Initiators GmbH & Co KG)

### S1: Stabilisatoren:

Joncryl ADR 4370 (BASF SE),
Joncryl ADR 4300 (BASF SE),
Joncryl ADR 4368 (BASF SE),
Joncryl ADF 1300 (BASF SE),
Joncryl ADP 1350 (BASF SE),
Epoxidiertes Sojaöl - Merginat ESBO (Hobum Oleochemicals),
Sojaöl (Soybean oil) (Sigma Aldrich)

### S2: Phosphite

- Irgafos 126: (Bis(2,4-di-tert-butylphenyl) Pentaerytritol Diphosphit, BASF SE),

### S3: Säurefänger

Hydrotalcit (Kyowa Chemical Industriy Co.),

### A) Thermostabilitätsmessungen

Für die folgenden Beispiele und Vergleichsversuche wurde Polystyrol 158K mit dem bromierten Flammschutzmittel FR und den in Tabelle 1 zusammengestellten Stabilisatoren S1, S2 und S3 durch Extrusion auf einem DSM-Miniextruder (Model: DSM Research B.V., Micro 15, Zweischneckenextruder) zu strangförmigen Flammschutzzusammensetzungen (Batches) verarbeitet. Dazu wurden 18 g Polystyrol 158 K Q4 mit der in Tabelle 1 genannten Menge des entsprechenden Stabilisators / Stabilisatorsystems und Flammschutzmittel gemischt und für 2 min bei 185 °C (80 U/min) extrudiert.

In allen Rezepturen wurden jeweils 38 wt% des Flammschutzmittels sowie 3 wt% des Flammschutzsynergisten FS und insgesamt 6 Gew.-% Stabilisatoren S1, S2 und S3 verwendet. Die Differenz zwischen Flammschutzmittel, Synergist und Stabilisatoren auf 100 wt% wurde entsprechend mit Polystyrol 158 K Q4 ausgeglichen.

Die Beurteilung der Eignung des Stabilisators / Stabilisatorsystems erfolgte durch folgende Methoden und Parameter:

### a) Thermische Behandlung:

Die wie oben genannt hergestellten Polymerstränge wurden für 10 min bzw. 20 min im Umlufttrockenschrank unter N2-Atmosphäre bei 230 °C thermisch behandelt. Anschließend wurden die Proben untersucht hinsichtlich:
i) der Gesamtverfärbung des Batches: gute Batches sind grundsätzlich hell, je schlechter die Stabilisierung desto dunkler (braun/schwarz) werden die Batches durch die thermische Behandlung (bzw. bereits während ihrer Herstellung)
ii) der Anzahl an schwarzen Punkten: schwarze Punkte im Batch sind ein Zeichen für die beginnende Zersetzung des Flammschutzmittels; gute Batches weisen keine schwarzen Punkte auf, schlechte eine Vielzahl;
insbesondere dieser Punkt wird durch ungleichmäßige Einmischung des Flammschutzmittels ins Polymer negativ beeinflusst (Kompatibilität);

### b) Messen des Beginns der HBr-Freisetzung:

Die HBr-Freisetzung bei 200 °C wurde in Analogie zur Bestimmung der Thermostabilität von PVC (HCl-Freisetzung gemäß DIN 53381, Verfahren B) bestimmt. Dazu wurden 10 g des hergestellten Batches in ein Schlenkrohr eingefüllt. Das Schlenkrohr wurde anschließend mit einem Gummistopfer verschlossen, welcher mit zwei Glasrohren ausgerüstet war. Durch das eine Glasrohr wurde Stickstoff eingeleitet, durch das zweite Glasrohr wieder abgeleitet. Der Abgasstrom wurde durch destilliertes Wasser geführt und die Leitfähigkeit des Wassers in Abhängigkeit von der Zeit aufgezeichnet. Der sich bei Zersetzung der halogenhaltigen Flammschutzmittel bildende Halogenwasserstoff (HBr) wurde durch den Trägergasstrom in das Wasser eingeleitet und erhöhte dessen Leitfähigkeit. Als Maß für die Stabilisierung wurde die Stabilitätszeit tₛₜ (Startzeit) herangezogen, welche die Zeit angibt, nach der sich die Leitfähigkeit um 50 Mikro Scm⁻¹ geändert hat. Je früher der Wert ansteigt, desto schlechter die Stabilisierung.

Die Ergebnisse Thermostabilitätsmessungen sind in Tabelle 1 widergegeben.

**Tabelle 1: Zusammensetzung der Flammschutzmittelmischungen und Brandschutzverhalten der Beispiele 1 bis 4 und Vergleichsversuche V1 bis V11.**

| Zusammensetzung (53 Gew.-% PS 158K, 38 Gew.-% FR, 3 Gew.-% FS, 6 Gew.-% Stabilisator S1-S3) | | | | | | | Temperversuche | | Schwarze Punkte nach Tempern, 10 min | HBr-Freisetzung | Gesamteignung |
|---|---|---|---|---|---|---|---|---|---|---|---|
| Nr. | wt% | Stabilisator S1 | wt% | Stabilisator S2 | wt% | Säurefänger S3 | 10min @ 230 °C [leicht verfärbt, stark verfärbt] | 20 min @ 230 °C [leicht verfärbt, stark verfärbt] | [viele, wenige, keine] | @ 200 °C, Tₛₜ [min] | Ungeeignet, Mittel, Geeignet |
| V1 | | - | | - | | - | stark verfärbt | stark verfärbt | viele | 55 | Ungeeignet |
| V2 | 6 | Joncryl ADR 4300 | | - | | - | stark verfärbt | stark verfärbt | viele | 95 | Ungeeignet |
| V3 | 6 | Joncryl ADF 1300 | | - | | - | leicht verfärbt | stark verfärbt | viele | 87 | Ungeeignet |
| V4 | 6 | Merginat ESBO | | - | | - | stark verfärbt | stark verfärbt | wenige | 110 | Ungeeignet |
| V5 | 6 | Sojaöl | | - | | - | stark verfärbt | stark verfärbt | wenige | 80 | Ungeeignet |
| V6 | 6 | Joncryl ADF 1350 | | | | | leicht verfärbt | stark verfärbt | viele | 100 | Ungeeignet |
| V7 | 6 | Joncryl ADD 3310 | | | | | stark verfärbt | stark verfärbt | viele | 75 | Ungeeignet |
| V8 | | | | - | 6 | DHT- | leicht verfärbt | stark verfärbt | viele | 300 | Ungeeignet |
| V9 | | | 6 | Irgafos 126- | | - | leicht verfärbt | stark verfärbt | wenige | 300 | Mittel |
| V10 | 6 | Joncryl ADR 4368 | | - | | - | leicht verfärbt | stark verfärbt | wenige | 135 | Mittel |
| V11 | 6 | Joncryl ADR 4370 | | - | | - | leicht verfärbt | stark verfärbt | keine | 185 | Mittel |
| 1 | 3 | Joncryl ADR 4370 | 3 | Irgafos 126 | | - | leicht verfärbt | stark verfärbt | keine | 417 | Geeignet |
| 2 | 3 | Joncryl ADR 4370 | | | 3 | DHT | leicht verfärbt | stark verfärbt | keine | 347 | Geeignet |
| 3 | 2 | Joncryl ADR 4370 | 2 | Irgafos 126 | 2 | DHT | leicht verfärbt | stark verfärbt | keine | 352 | Geeignet |
| 4 | 6 | Joncryl ADR 4370 | 6 | Irgafos 126 | | - | leicht verfärbt | leicht verfärbt | keine | 439 | Sehr Geeignet |

### B) Brandverhalten von Polystyrolextrusionsschaumstoffplatten

Zur Überprüfung des Brandverhaltens wurden die Batches der Beispiele 1 und 3 (siehe Tabelle 1) zur Herstellung von XPS Schaumstoffplatten verwendet.

Die Herstellung von XPS Schaumstoffplatten erfolgte auf einer Tandem-Extrusionsanlage. PS 158K Q4 (Polystyrol mit einem MVR (200 °C, 5 kg) von 3 ml/10 min und einer Vicat-Erweichungstemperatur (VST/A/50) von 106 °C (Handelsprodukt der Styrolution GmbH)) wurde zusammen mit der Flammschutzmittelmischung aus Beispiel 1 bzw. Beispiel 3 (Polystyrolbatch) kontinuierlich einem Aufschmelzextruder zugeführt. Die Menge des eingesetzten Batches betrug hierbei jeweils 4 wt%. Durch eine in dem Aufschmelzextruder eingebrachte Injektionsöffnung wurde kontinuierlich Treibmittel (2,5 Gew.-% CO2, 2,5 Gew.-% Aceton, 1 % i-Butan) zugeführt. Der Gesamtdurchsatz inkl. der Treibmittel betrug 60 kg/h. Die treibmittelhaltige Schmelze wurde in einem nachfolgenden Kühlextruder abgekühlt und durch eine Schlitzdüse extrudiert. Die aufschäumende Schmelze wurde durch eine beheizte Kalibrierung, deren Oberflächen mit Teflon ausgestattet war, über ein Rollenband abgezogen und zu Platten mit 100 mm Breite und 25 mm Dicke geformt. Die Plattendichte betrug 35 kg/m³.

Die anschließende Messung zur Ermittlung des Brandverhaltens der Schaumstoffplatten erfolgte nach 6 wöchiger Lagerung gemäß DIN 4102. Diese Prüfung stellt die Beanspruchung durch eine kleine, definierte Flamme (Streichholzflamme) dar. Unter dieser Beanspruchung müssen die Entzündbarkeit und die Flammenausbreitung innerhalb einer bestimmten Zeit begrenzt sein. Die Prüfung wird in einem mit einem Brenner ausgerüsteten Brennkasten durchgeführt. Dabei wird die Probe 15 Sekunden beflammt und anschließend die Flamme entfernt. Die Dauer zwischen Beginn der Beflammung und dem Zeitpunkt, an der die Flammenspitze der brennenden Probe eine bestimmte Messmarke erreicht, wird gemessen sofern die Flamme nicht von selbst erlischt.

Die Schaumstoffplatten aus beiden Beispielen 1 und 3 erreichten die Klassifizierung B2.

### C) Brandverhalten von Polystyrolschaumstoffplatten aus expandierbaren Granulat

Zur Überprüfung des Brandverhaltens wurden die Batches der Beispiele 1 und 3 (siehe Tabelle 1) zur Herstellung von expandierbarem EPS verwendet.

Expandierbare Polystyrolgranulate wurden durch Schmelzeextrusion erhalten. Hierzu wurden ca. 6 Gew.-% n-Pentan und 5 % Gew.-% Graphit UF 99,5 (Kropfmühl) in eine Polystyrolschmelze aus PS 158K Q4 (Polystyrol mit einem MVR (200 °C, 5 kg) von 3 ml/10 min und einer Vicat-Erweichungstemperatur (VST/A/50) von 106 °C (Handelsprodukt der Styrolution GmbH)) eingemischt. Nach Abkühlen der treibmittelhaltigen Polystyrolschmelze von ursprünglich 240 °C auf eine Temperatur von 180 °C wurde eine Flammschutzmittelmischung mit der Zusammensetzung aus Beispiel 1 bzw. Beispiel 3 (Polystyrolbatch) über einen Seitenstromextruder in den Hauptstrom eingemischt. Die Menge des eingesetzten Batches betrug hierbei jeweils 4 wt%. Das Gemisch aus Polystyrolschmelze, Treibmittel, Graphit, Flammschutzmittel und thermischem Stabilisator wurde mit einer Förderrate von 70 kg/h durch eine Düsenplatte gefördert. Mit Hilfe einer druckbeaufschlagten Unterwassergranulierung wurden kompakte Granulate aus expandierbarem Polystyrol mit enger Größenverteilung erhalten.

Durch Einwirkung von Wasserdampf wurden die Granulate aus expandierbarem Polystyrol vorgeschäumt und nach 12-stündiger Lagerung durch weitere Behandlung mit Wasserdampf in einer geschlossenen Form zu Schaumstoffblöcken mit einer Dichte von ca. 15 kg/m³ verschweißt.

Die Ermittlung des Brandverhaltens der Schaumstoffplatten erfolgte nach 72-stündiger Lagerung bei einer Schaumstoffdichte von ca. 15 kg/m³ gemäß DIN 4102 (analog wie weiter oben beschrieben).

Die Schaumstoffplatten aus beiden Beispielen 1 und 3 erreichten die Klassifizierung B2.

## Patentansprüche

1. Flammschutzmittelmischung, enthaltend
(a) mindestens ein thermoplastisches Polymer,
(b) mindestens eine organische Bromverbindung mit einem Bromgehalt im Bereich von 40 bis 90 Gew.-% als Flammschutzmittel (FR),
(c) gegebenenfalls ein oder mehrere Flammschutzsynergisten (FS),
(d) mindestens ein epoxymodifiziertes Copolymer auf Basis von Acrylat- und/oder Methacrylat als Stabilisator (S1),
(e) mindestens ein Phosphit als Stabilisator (S2) oder
(f) mindestens ein oder mehrere Säurefänger (S3).

2. Flammschutzmittelmischung nach Anspruch 1, enthaltend
(a) 5 bis 80 Gew.-% mindestens eines thermoplastischen Polymers,
(b) 18,5 bis 55 Gew.-% mindestens einer organischen Bromverbindung mit einem Bromgehalt im Bereich von 40 bis 90 Gew.-%als Flammschutzmittel (FR),
(c) 0 bis 10 Gew.-% ein oder mehrerer Flammschutzsynergisten (FS),
(d) 0,5 bis 10 Gew.-% mindestens ein epoxymodifiziertes Copolymer auf Basis von Acrylat- und/oder Methacrylat als Stabilisator (S1),
(e) 0,5 bis 10 Gew.-%mindestens eines Phosphits als Stabilisator (S2) und
(f) 0,5 bis 10 Gew.-% ein oder mehrerer Säurefänger (S3).

3. Flammschutzmittelmischung nach Anspruch 1 oder 2, **dadurch gekennzeichnet, dass** sie als thermoplastisches Polymer ein Styrolpolymer enthält.

4. Flammschutzmittelmischung nach einem der Ansprüche 1 bis 3, **dadurch gekennzeichnet, dass** sie als Stabilisator (S1) ein epoxymodifiziertes Copolymer auf Basis von Acrylat- oder Methacrylat mit einem Epoxyequivalentwert (EEW) im Bereich von 100 bis 400 g/mol enthält.

5. Flammschutzmittelmischung nach einem der Ansprüche 1 bis 4, **dadurch gekennzeichnet, dass** sie als Stabilisator (S2) ein cyclisches Diphosphit enthält.

6. Flammschutzmittelmischung nach einem der Ansprüche 1 bis 5, **dadurch gekennzeichnet, dass** sie als Säurefänger (S3) Hydrotalcit, Al(OH)₃ oder Mg(OH)₂ enthält.

7. Flammschutzmittelmischung nach einem der Ansprüche 1 bis 6, **dadurch gekennzeichnet, dass** sie als Flammschutzsynergist (FS) Dicumyl enthält.

8. Verwendung der Flammschutzmittelmischung nach einem der Ansprüche 1 bis 7 zur Herstellung von flammgeschützten Styrolpolymerschaumstoffen.

9. Verfahren zur Herstellung von expandierbaren Styolpolymergranulaten, **dadurch gekennzeichnet, dass** man eine Flammschutzmittelmischung nach einem der Ansprüche 1 bis 7 in eine Styrolpolymerschmelze einmischt, durch eine Düsenplatte extrudiert und in einem Unterwassergranulator unter Druck granuliert.

10. Verfahren zur Herstellung von Styolpolymerextrusionsschaumstoffen, **dadurch gekennzeichnet, dass** man eine Flammschutzmittelmischung nach einem der Ansprüche 1 bis 7 in eine Styrolpolymerschmelze einmischt und durch eine Schlitzdüse extrudiert.
